# FASCICULE DE BREVET EUROPEEN

(11) **EP 0 716 395 B1**
(45) Date de publication et mention de la délivrance du brevet: **24.10.2001**
(21) Numéro de dépôt: 95203291.0
(22) Date de dépôt: 29.11.1995
(51) Int. Cl.: G06T 9/00

(54) **Procédé pour le décodage d'images comprimées**
Verfahren zum Dekodieren komprimierter Bilder
A method for decoding compressed images

(30) Priorité: 07.12.1994 FR 9414727
(43) Date de publication de la demande: 12.06.1996
(73) Titulaire: Koninklijke Philips Electronics N.V., 5621 BA Eindhoven (NL)
(72) Inventeur: Fautier, Thierry, F-75008 Paris (FR); Molter, David, F-75008 Paris (FR)
(74) Mandataire: Charpail, François

(56) Documents cités:
- EP-A- 0 598 904
- EP-A- 0 618 722
- WO-A-92/20192
- MICROPROCESSOR REPORT, vol. 8, no. 2, 14 Février 1994 pages 12-17, FEIGEL C 'Processor aim at desktop video'

## Description

La présente invention concerne un procédé pour décoder des images codées numériquement avec compression, et un dispositif de réception munie de moyens pour décoder des images codées numériquement avec compression
- le nombre de pixels à traiter par unité de temps étant fixe,
- une image étant divisée en blocs de pixels comportant chacun plusieurs pixels dans chacune des directions horizontale et verticale,
- une pluralité de blocs qui, côte à côte, occupent la largeur d'une ligne d'image étant appelée une ligne de blocs,
- la dite compression étant basée sur un traitement par blocs transmis séquentiellement, une image pouvant être définie d'au maximum trois manières, à savoir
- des images dites "intra", codées en absolu sans référence par rapport à d'autres images,
- des images dites "prédites", codées en faisant référence à une précédente image intra ou prédite, et
- des images dites "bidirectionnelles" codées à partir d'au maximum deux autres images chacune intra ou prédite, Dans le procédé
- chacune des images est affichée après décodage sous la forme d'une trame paire et d'une trame impaire,
- certaines images bidirectionnelles sont affichées avant une des images intra ou prédite qui servent à son décodage,
- les images bidirectionnelles sont décodées par étapes successives d'une ligne de blocs à la fois,
- un espace mémoire divisé en zones ayant une capacité d'une ligne de blocs chacune est prévu pour mémoriser des lignes de blocs d'une image bidirectionnelle nouvellement décodée
- et chaque ligne de blocs nouvellement décodée remplace au fur et à mesure en mémoire le contenu d'une des dites zones qui a déjà été affiché.

Le dispositif de réception est munie
- de moyens pour afficher chacune des images, après décodage, sous la forme d'une trame paire et d'une trame impaire et pour afficher certaines images bidirectionnelles avant une des images intra ou prédite qui servent à son décodage,
- de moyens pour décoder les images bidirectionnelles par étapes successives d'une ligne de blocs à la fois,
- d'un espace mémoire divisé en zones ayant chacune une capacité d'une ligne de blocs, prévu pour mémoriser des lignes de blocs d'une image bidirectionnelle nouvellement décodée,
- et de moyens pour remplacer au fur et à mesure en mémoire le contenu d'une des dites zones qui a déjà été affiché par une ligne de blocs nouvellement décodée.

L'invention s'applique en télévision numérique, que ce soit en définition standard ou en haute définition.

Les algorithmes de décompression d'images à bas débit utilisent des traitements temporels qui nécessitent une capacité de mémorisation importante. Le déroulement temporel de l'affichage est différent de celui du décodage : du fait que le décodeur travaille en mode image, deux trames sont décodées ensemble alors qu'elles sont affichées l'une après l'autre, raison pour laquelle on réalise la mémorisation d'une image entière pour en relire l'une après l'autre les deux trames en vue de leur affichage. Un tel procédé pour décoder des images comprimées est décrit dans la demande de brevet FR-A-2 703 535. Le procédé décrit dans ce document permet d'utiliser moins de mémoire parce que, les images bidirectionnelles étant décodées par étapes successives d'une ligne de blocs à la fois, les lignes de blocs en cours de décodage remplacent au fur et à mesure dans la mémoire une ligne de blocs dont le contenu a déjà été affiché.

L'invention procure un procédé et un dispositif de réception encore plus économiques, en coût global du décodeur et de la mémoire, qui peut stocker les images décodées dans une taille mémoire minimum sans compliquer les moyens de gestion de cette mémoire. Elle apporte une réduction supplémentaire de l'espace mémoire nécessaire pour le stockage des images bidirectionnelles.

Un procédé et un dispositif selon l'invention sont décrits aux revendications 1 et 7 respectivement.

Ce but est atteint du fait que :
- un décodage de chaque image bidirectionnelle est effectué au moins deux fois de suite, un décodage d'une image étant réalisé pour chaque trame à afficher,
- l'affichage d'une des trames, paire ou impaire, tirée du contenu du premier décodage, commence avant la moitié de la durée du premier décodage,
- puis l'affichage de l'autre trame, respectivement impaire ou paire, tirée du contenu du second décodage, commence à son tour avant la moitié de la durée du second décodage. Pour mettre en oeuvre ce procédé, le dispositif est munie de moyens pour effectuer au moins deux fois de suite un décodage de chaque image bidirectionnelle et réaliser un décodage d'une image pour chaque trame à afficher, et de moyens pour faire commencer l'affichage d'une des trames, paire ou impaire, tirée du contenu du premier décodage, avant la moitié de la durée du premier décodage, et pour faire commencer à son tour l'affichage de l'autre trame, respectivement impaire ou paire, tirée du contenu du second décodage, avant la moitié de la durée du second décodage. L'invention tire donc profit du fait que les algorithmes de compression d'images opèrent sur des images elles mêmes constituées de 2 trames (paire et impaire), l'idée de base de l'invention étant de ne pas stocker même une seule trame d'image bidirectionnelle, mais seulement quelques lignes de blocs, en s'appuyant sur le fait que les images bidirectionnelles peuvent être décodées deux fois plus vite que les autres, ce qui permet de réaliser ce décodage deux fois de suite dans le temps d'une image. Seule la trame paire est alors écrite en mémoire lors de l'affichage de la trame paire et seule la trame impaire est écrite en mémoire lors de l'affichage de la trame impaire.

Avantageusement, dans le cas d'images à 24 images par seconde devant être affichées à 60 trames par seconde, pour un couple d'images bidirectionnelles, un décodage d'une des images du couple est effectué deux fois de suite, et un décodage de l'autre image est effectué trois fois de suite, avec à chaque fois l'affichage d'une trame, commençant avant la fin du décodage correspondant. Pour mettre en oeuvre ce procédé, le dispositif est munie, pour le cas d'images à 24 images par seconde devant être affichées à 60 trames par seconde, de moyens pour, lors d'un traitement d'un couple d'images bidirectionnelles, effectuer deux fois de suite un décodage d'une des images du couple et effectuer trois fois de suite un décodage de l'autre image, et de moyens pour faire commencer, à chaque fois, l'affichage d'une trame avant la moitié de la durée du décodage correspondant. Une gestion par zones ayant une capacité d'une ligne de blocs peut avantageusement être effectuée aussi pour des images intra ou prédites, gestion par laquelle toute zone ayant une capacité d'une ligne de blocs utilisée par une partie de trame est re-allouée pour stocker une partie de trame nouvellement décodée si son contenu a déjà été affiché et si elle n'est plus utilisée comme référence pour le décodage d'une image bidirectionnelle. Pour mettre en oeuvre ce procédé, le dispositif est munie de moyens pour réaliser aussi pour les images intra ou prédites une gestion par zones ayant chacune une capacité d'une ligne de blocs, et ces moyens re-allouent, pour stocker une partie de trame nouvellement décodée, toute zone ayant une capacité d'une ligne de blocs utilisée par une partie de trame, si son contenu a déjà été affiché et si elle n'est plus utilisée comme référence pour le décodage d'une image bidirectionnelle.

Grâce à la place mémoire ainsi gagnée, toute la capacité de mémoire destinée au stockage des images décodées peut être placée dans un même boîtier mémoire d'une capacité de seize megabits, dans lequel les images qui arrivent pour être décodées peuvent trouver suffisamment de place restante pour y être mémorisées en sus des images décodées.

Ces aspects de l'invention ainsi que d'autres aspects plus détaillés apparaîtront plus clairement grâce à la description suivante d'un mode de réalisation non limitatif.

La figure 1 illustre le codage des images les unes par rapport aux autres.

La figure 2 est un diagramme des temps dans l'art antérieur.

La figure 3 est un diagramme des temps dans le procédé de l'invention.

La figure 4 illustre la gestion d'une partie d'une page mémoire contenant des lignes de blocs d'images bidirectionnelles.

La figure 5 est un diagramme des temps dans le procédé de l'invention, dans le cas d'images de cinéma à 24 images par seconde, à afficher par trames à 60 trames par seconde.

La figure 6 représente schématiquement le partitionnement d'un dispositif de décompression et décodage dans un dispositif de réception selon l'invention, avec une mémoire divisée en pages P1 à P4 et PB.

La figure 7 représente schématiquement la constitution de l'élément 2 de la figure 6.

Bien que l'invention concerne le décodage, une description préliminaire du codage permettra de mieux comprendre le procédé et le dispositif de décodage dans une installation de réception .

Les algorithmes de compression d'images animées font appel a des techniques de traitement spatial (transformation en cosinus discret, quantification adaptative, codage entropique) et de traitement temporel (compensation de mouvement, interpolation temporelle).

Des images de trois types sont définies :
- les images dites I ("intra"), codées sans référence par rapport à d'autres images,
- les images dites P ("prédites"), codées en faisant référence à la précédente image, celle-ci elle même de type I ou P,
- les images dites B ("bidirectionnelles"), interpolées avec compensations de mouvement par rapport à une image I ou P qui la précède et une image I ou P qui la suit.

Les prédictions utilisées pour les images bidirectionnelles sont toujours issues des images I ou P adjacentes. Ainsi les images I et P jouent un rôle particulier, puisqu'elles servent d'images de référence pour des compensations de mouvement.

Un exemple de séquence d'images avant codage est le suivant, la ligne du haut indiquant le type de l'image, I, P ou B qui va être fabriquée par le codeur à partir des images arrivantes qui bien sûr, avant codage, sont toutes définies sans référence à d'autres images, et la ligne du bas indique l'ordre d'arrivée de ces images :
type : I B B P B B P B B...
ordre d'arrivée : 0 1 2 3 4 5 6 7 8...

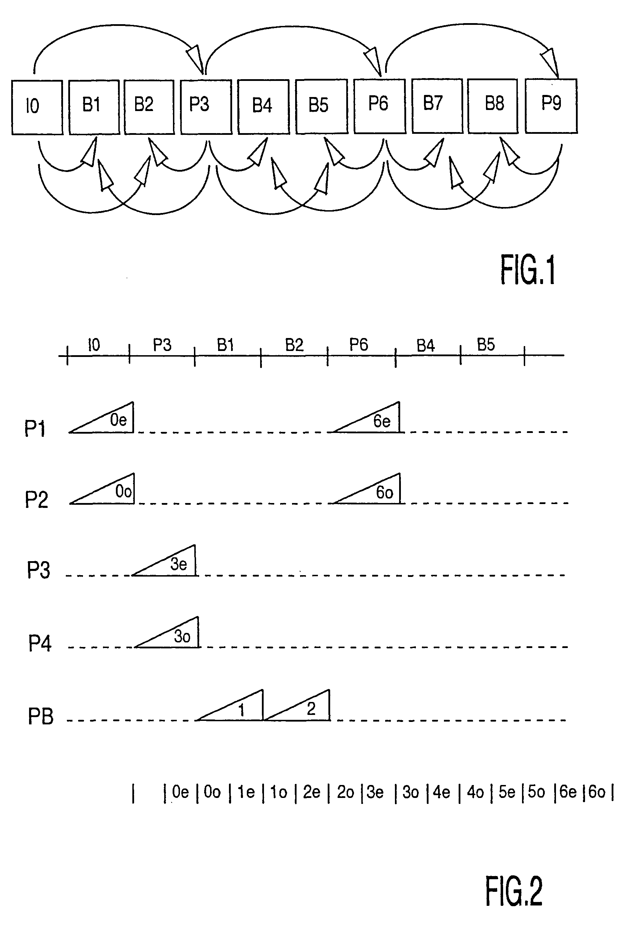

La figure 1 illustre à partir de quelles images les autres sont engendrées. L'image P3 est engendrée à partir de l'image 10, les images B1 et B2 à partir des images 10 et

P3, l'image P6 à partir de l'image P3, les images B4 et B5 à partir des images P3 et P6, l'image P9 à partir de l'image P6, les images B7 et B8 à partir des images P6 et P9, etc. La troisième image P3 est créée dans le codeur à partir de la première image I0, elle sort donc du codeur après cette dernière, les première et deuxième images bidirectionnelles sont créées à partir des images I0 et P3, elles sortent donc du codeur après elles, l'image P6 est créée à partir de l'image P3, et ainsi de suite, et les images de l'exemple ci-dessus sortent du codeur (et donc arrivent au décodeur) dans l'ordre suivant :
type : I P B B P B B... correspondant à l'ordre d'arrivée initial : 0 3 1 2 6 4 5...

Les dimensions horizontales et verticales d'une image sont appelées DIMH et DIMV. Le type de codage peut s'effectuer soit en mode image, auquel cas l'image est envoyée sous la forme d'un tableau de format DIMH x DIMV, soit en mode trame, auquel cas l'image est envoyée en deux trames successives de dimension DIMH x DIMV/2. Chaque image (ou trame) est découpée en blocs dont les dimensions horizontales et verticales sont respectivement H et V. Habituellement, H et V valent 8 pixels ou 16 pixels.

En ce qui concerne le décodage en réception, l'ordre de sortie du décodeur, qui doit correspondre à l'ordre d'affichage des images à l'écran, est le même que l'ordre d'arrivée au codeur à l'émission :
type : I B B P B B P...
ordre de sortie : 0 1 2 3 4 5 6...

L'affichage est toujours effectué trame par trame et se fait sur la base de lignes.

Lorsque le type de codage est prédictif et interpolateur (images bidirectionnelles), un ré-ordonnancement des images doit avoir lieu au niveau du décodeur, ce qui nécessite une gestion particulière de la mémoire.

Le diagramme temporel du déroulement du décodage selon le document cité est représenté figure 2. La ligne du haut indique les instants d'arrivée des images I0, P3, B1, etc, au décodeur. Dans ce procédé connu, on stocke d'une part deux images de référence I ou P dans quatre pages notées P1, P2, P3, P4, contenant chacune une trame (Oe, Oo, 3e, 3o), et d'autre part on stocke des parties d'images bidirectionnelles décodées dans une page notée PB. La page PB est divisée en "zones ligne de blocs", une "zone ligne de blocs" étant un espace mémoire pouvant contenir une ligne de blocs d'une trame, contenant V lignes de chacune DIMH pixels pour la luminance. Une telle zone contient par exemple 720x16 pixels, en définition standard. Les images sont affichées à un rythme double par rapport à celui auquel elles sont décodées, correspondant aux cas d'un codage a 30 Hz et d'un affichage à 60 Hz, ou d'un codage a 25 Hz et d'un affichage à 50 Hz. L'affichage des première et seconde trames de l'image B1, dont le décodage est indiqué 1, correspond aux temps indiqués 1e et 1o. Il commence à peu près au milieu du décodage 1 ; la moitié de l'image est alors enregistrée dans la mémoire PB, qui doit donc pouvoir la contenir.

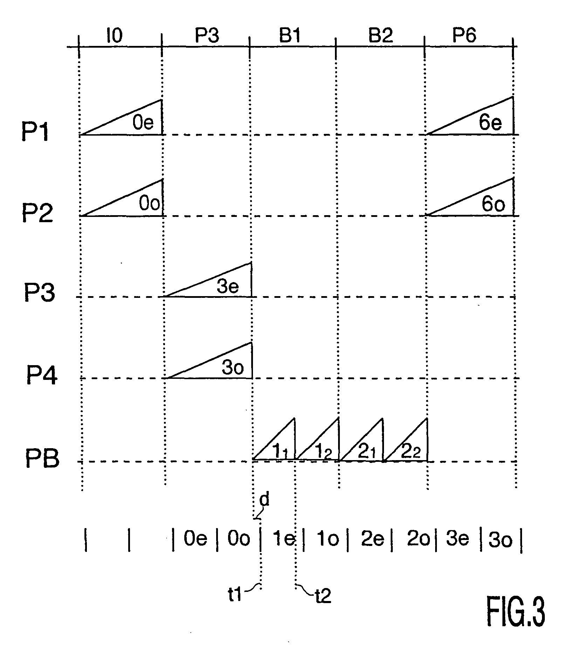

La figure 3 représente un diagramme de temps selon l'invention, correspondant au cas d'un codage a 30 Hz et d'un affichage à 60 Hz, ou d'un codage a 25 Hz et d'un affichage à 50 Hz. Les affichages des trames sont indiqués en bas de la figure chaque fois entre deux traits verticaux. A partir du début du décodage 1₁, au bout d'un temps noté d, bien inférieur au temps de décodage d'une demi-image, la page PB contient N lignes de blocs issus du décodage 1₁ de l'image B1, nécessaires pour afficher la trame le, et l'affichage de la trame le peut commencer au temps noté t1. Lorsque le décodage 1₁ de l'image B1 est terminé, un second décodage identique 1₂ est recommencé au temps t2, pour fournir la trame 1o. La mémoire contient alors les dernières lignes de la trame paire 1e. Le second décodage 1₂ de la trame B1 ne pourra progresser qu'au fur et à mesure de la désallocation des lignes de blocs du bas de la trame le par le processus d'affichage de celles-ci. Le même processus sera appliqué au décodage de l'image B2, avec deux décodages 2₁ et 2₂, fournissant respectivement la trame 2e et la trame 2o.

La trame le de B1 pourrait être affichée dès qu'une ligne de blocs a déjà été décodée. La taille mémoire minimale de la page PB serait 2 x V x DIMH, à savoir deux lignes de blocs : une en cours de décodage et d'écriture, l'autre en cours de lecture pour affichage. Néanmoins, le décodage doit commencer un peu en avance par rapport à l'affichage, afin d'absorber les variations possibles du temps mis à décoder une ligne de blocs. En effet, ce temps varie selon le contenu de l'image comprimée, et le temps de décodage d'une seule ligne de bloc peut être supérieur au temps d'affichage d'une ligne de blocs qui est toujours le même. Le décodage de la ligne de blocs suivante risquerait alors de ne pas être terminé au moment où il faut l'afficher. En pratique lorsque le temps du décodage en cours correspond au temps de décodage moyen d'un certain nombre N de lignes de blocs, il est possible de commencer à afficher ce qui est déjà décodé, avec une sécurité suffisante.

On supposera que le temps de décodage d'une image, appelé Tdec, est au plus égal à une durée d'image T(image), pour les images I ou P, et égal à T(image) / 2 pour les images bidirectionnelles, T(image) étant égal à 40 mS dans un système 50 Hz ou 33 mS dans un système 60 Hz. La durée de décodage d'une ligne de blocs dépend du contenu de l'image à décoder, et de plus elle est bornée. Le temps de décodage d'une ligne de blocs suit par conséquent une loi de probabilité complexe. On suppose que le temps de décodage est linéaire, c'est a dire que la durée de décodage d'une ligne de blocs est à peu près égale à (V/DIMV) × Tdec pour les images I ou P, et égal à (V/DIMV × Tdec) / 2 pour les images bidirectionnelles. Cependant, on envisage dans l'invention les dispositifs nécessaires au cas où le décodage est en avance ou en retard par rapport au modèle utilisé.

Entre le début et la fin de l'affichage de chaque trame d'image bidirectionnelle, les zones mémoire correspondant aux lignes de blocs sont re-allouées dès qu'elles ont été affichées.

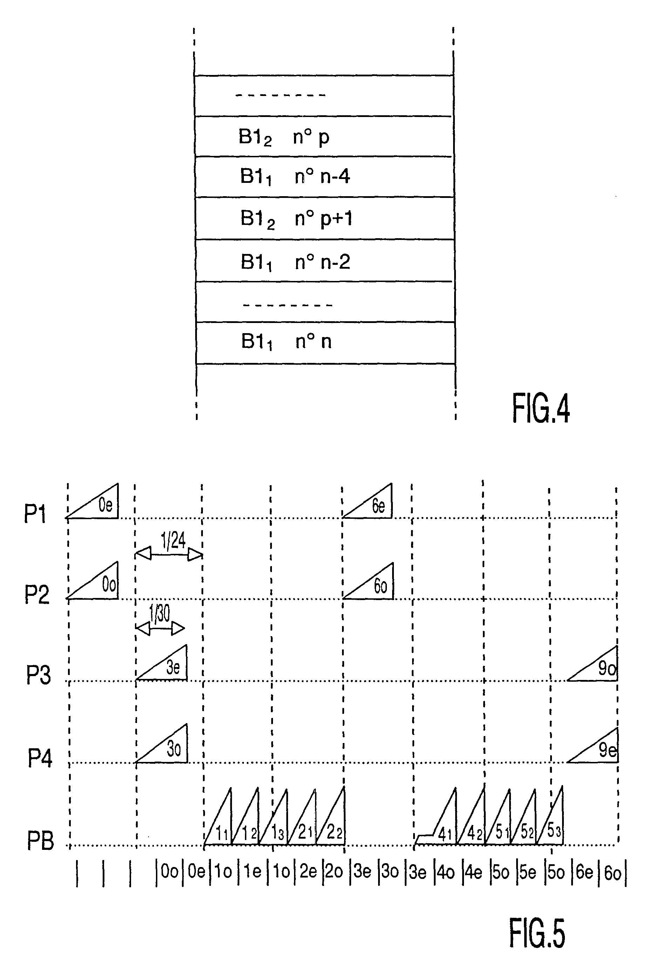

La figure 4 représente un état d'une partie de la page PB, chaque rectangle représentant une zone de mémoire pour une ligne de blocs. Il s'agit de l'état à l'instant t2 de la figure 3, alors que la trame le paire est presque complètement affichée, et que le décodage 1₂ commence.

L'indication "B1₂ n° p+1", par exemple, signifie que la zone de mémoire en question contient la ligne de blocs numéro "p+1" issue du second décodage de l'image bidirectionnelle B1. Une ligne de blocs issue du premier décodage de l'image bidirectionnelle B1, qui était placée avant B1₂ n°p a déjà été affichée et la zone mémoire est donc libre (-----). De même une ligne de blocs placée entre les lignes "B1₁ n° n-2" et "B1₁ n° n", issues du premier décodage de l'image bidirectionnelle B1, a déjà été affichée et la zone mémoire est donc libre (-----).

Ce type de gestion permet l'utilisation pour la page PB d'un espace mémoire compris entre la taille minimum, (2 x V x DIMH) et la taille maximum, DIMH x DIMV.

Des essais sur des séquences d'images test peuvent être réalisés avec différentes valeurs pour Tdec et pour le nombre N de zones lignes de blocs prévues en mémoire, sans connaître à priori une borne exacte pour le temps de décodage Tdec, afin de trouver le couple de valeurs optimales pour Tdec et pour la taille mémoire affectée aux lignes de blocs d'images bidirectionnelles.

Inversement, si la taille mémoire allouée aux lignes de blocs pour les images bidirectionnelles est fixée, on peut déterminer la fréquence de travail du système de décodage pour aboutir à la valeur de Tdec qui satisfait les contraintes issues de la taille mémoire allouée pour le stockage des lignes de blocs des images bidirectionnelles. Pour un système où le temps de décodage est linéaire la taille typique pour la page PB est de 3 x 2 x V x DIMH soit six lignes de blocs (N=6).

Le principe décrit ci dessus s'applique de façon analogue à un système 60 Hz codé à 30 Hz, les pages P1, P2, P3, P4, PB étant toujours gérées par lignes de blocs.

Dans le cas d'un système à 60 Hz, un décodeur doit être capable de décoder une séquence codée à 30 ou 60 Hz comme décrit plus haut, mais aussi une séquence de film codée à 24 Hz (alors que dans un système 50 Hz, toutes les séquences sont codées à 25 ou 50 Hz).

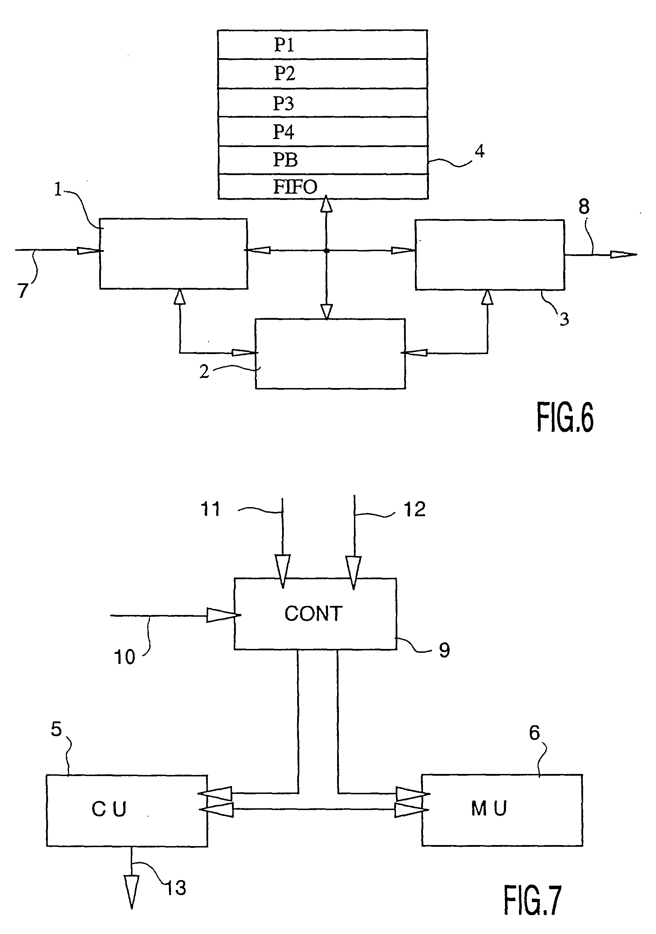

La figure 5 représente le séquencement d'un décodage à 24 Hz avec affichage à 60 Hz. Les images devant être présentées à 30 Hz, le décodage des images ne dure que 1/30^{e} de seconde pour les images I ou P et 1/60^{e} S pour des images bidirectionnelles. Par contre le rythme de codage est de 24 Hz, et les images à décoder arrivent tous les 1/24^{e} de seconde. Les affichages des trames sont indiqués en bas de la figure chaque fois entre deux traits verticaux. Pour obtenir une fréquence d'affichage plus grande que le nombre d'images disponibles, toutes les deux images une même trame est affichée deux fois (ici : trame lo affichée à nouveau après trame 1e, trame 3e affichée à nouveau après trame 3o, etc). En outre, du fait que cette seconde trame supplémentaire 3e est paire, la trame suivante doit être impaire ce qui amène à afficher à sa suite 4o et non 4e. On remarque en outre qu'au début du décodage 4₁, on n'est pas prêt à afficher la trame 4o. De ce fait le décodage s'arrête faute de place en mémoire puis reprend dès que la trame 4o commence d'être affichée. Le retard correspondant retarde le décodage de la suite (4₂, 5₁, 5₂, 5₃) ce qui amène à retarder le décodage de la trame prédite qui suit (P9) mais il reste néanmoins encore 1/30^{e} de seconde disponible avant l'arrivée de l'image suivante, a près quoi tout est à nouveau en place.

Le nombre de trames de retard entre l'affichage et le décodage doit être constant. En 60 Hz, à partir du début du décodage d'une trame de type intra (Oe, ligne P1, figure 5), on compte trois départs d'affichage de trame, et le quatrième correspond à l'affichage de la première trame d'image intra en question (0o). Ceci n'est vraiment nécessaire que dans le cas d'une séquence de film codée à 24 Hz, mais pour simplifier la procédure de décodage, on fait de même dans tous les cas. Ceci constitue une différence importante par rapport à un système 50 Hz dans lequel (figure 3), à partir du début du décodage d'une trame de type intra (Oe), on compte seulement deux départs d'affichage, et le troisième correspond à l'affichage de la trame d'image intra en question (Oe).

La figure 6 représente le partitionnement d'un système de décompression et décodage d'images animées d'un dispositif de réception. Il est découpé fonctionnellement en quatre éléments:
- une mémoire 4 divisée en quatre pages P1, P2, P3, P4, utilisée pour contenir chacune une trame intra ou prédite, et une cinquième page PB qui est divisée en zones dites "zones ligne de blocs" utilisées pour stocker chacune une ligne de blocs d'une image bidirectionnelle. La mémoire 4 contient en outre une zone notée "FIFO" utilisée pour stocker les images qui arrivent au décodeur.
- un élément 1 de décodage, en charge :
   - du décodage et de la décompression des images qu'il reçoit sous forme comprimée par un conducteur 7 (en provenance d'éléments de réception et de démodulation de l'installation de réception, connus en tant que tels, et de ce fait non représentés),
   - et de l'écriture dans la mémoire externe 4,

- un élément d'affichage 3 qui relit les images décodées depuis la mémoire externe pour les fournir via un conducteur 8 à un afficheur de l'installation de réception (afficheur connu en soi et de ce fait non représenté), en synchronisme avec les synchronisations vidéo,
- un élément gestionnaire de mémoire d'images 2, qui permet la mise en oeuvre de l'invention.

L'élément gestionnaire de mémoire d'images 2 fournit à l'élément de décodage 1 :
- les adresses mémoire où écrire le début de chaque ligne de blocs de l'image en cours de décodage,
- les adresses mémoire des trames de prédiction utilisées pour les compensations de mouvement ( références passée et future).

Pour des images bidirectionnelles, cet élément fonctionne à partir de la règle suivante : toute zone utilisée par une ligne de bloc peut être re-allouée pour stocker une ligne de bloc en cours de décodage si son contenu a déjà été affiché. Un tel gestionnaire de mémoire est bien connu en soi dans le domaine de l'informatique, et la description par ses fonctions est donc suffisante pour qu'un homme de métier sache le réaliser.

Pour chaque nouvelle ligne de blocs en cours de décodage issue d'une image bidirectionnelle, l'élément gestionnaire de mémoire d'images 2 alloue deux lignes de blocs en cas de codage image et une ligne de blocs en cas de codage trame. Si aucune mémoire ligne de bloc n'est disponible, le processus de décodage est stoppé jusqu'à ce que deux lignes de blocs soient disponibles dans la page PB. Si cela risque d'arriver, il faut réserver au départ une zone plus importante pour la page PB.

L'élément gestionnaire de mémoire d'images 2 est aussi chargé, pour chaque nouvelle image I ou P décodée, d'allouer deux zones mémoires contenant des trames déjà affichées, pour stocker l'image à décoder.

Si l'image contenue dans une zone trame est en cours d'affichage, une gestion au niveau de lignes de blocs peut aussi être effectuée par l'élément gestionnaire de mémoire d'images, pour des images I ou P, en plus de celle qu'il réalise pour des images bidirectionnelles. La règle de fonctionnement de l'élément gestionnaire de mémoire d'images 2 peut alors être élargie de la façon suivante : toute zone utilisée par une trame ou une ligne de bloc peut être re-allouée pour stocker une trame ou ligne de bloc de même type en cours de décodage si son contenu a déjà été affiché et si elle n'est plus utilisée comme référence pour les compensations de mouvement. Ainsi, si la ligne de blocs numéro "n" d'une mémoire P1 à P4 a été complètement affichée, elle peut être utilisée pour stocker la ligne de bloc numéro "p" (avec p<n) de l'image I ou P en cours de décodage, si aucune autre mémoire de trame n'est disponible. Ainsi par exemple, dans le cas d'un codage purement prédictif sans images bidirectionnelles, les images P arrivant alors au décodeur à cadence plus élevée que dans le cas où des images bidirectionnelles viennent s'insérer entre les images P, la mémoire P1 ou la mémoire P3, organisée en lignes de blocs, peut contenir dans sa partie basse le bas d'une trame paire et dans sa partie haute le début de la trame paire suivante, et de même la mémoire P2 ou la mémoire P4, organisée en lignes de blocs, peut contenir dans sa partie basse le bas d'une trame impaire et dans sa partie haute le début de la trame impaire suivante.

L'élément gestionnaire de mémoire d'images 2 fournit à l'élément d'affichage l'adresse mémoire correspondant au début de chaque ligne de blocs de l'image à afficher, à chaque demande de l'élément d'affichage, toutes les V lignes d'affichage.

Le processus d'affichage doit être prioritaire, il ne doit jamais être en attente de données nécessaires à l'affichage, sauf si le processus de décodage devait être interrompu par défaut de données compressées à l'entrée du processus de décodage. Le processus d'affichage libère la mémoire par zones de ligne de blocs, qui sont ensuite re-allouées par l'élément gestionnaire de mémoire d'images 2 pour stocker des lignes de blocs en cours de décodage.

La figure 7 représente le partitionnement interne de l'élément gestionnaire de mémoire d'images 2 de la figure 6. Cet élément est constitué de trois modules : un module de contrôle 9, un module "unité mémoire" 6, et un module "unité de calcul" 5.

Le module de contrôle 9 reçoit de l'élément de décodage 1, via un conducteur 10, les informations issues du train binaire correspondant aux caractéristiques de l'image décodée, dont notamment :
- le type d'image,
- le type de codage,
- le type de sous-échantillonnage de la chrominance,

Il reçoit aussi de ce même élément de décodage, via un conducteur 11, des demandes d'allocation mémoire pour la prochaine ligne de blocs a décoder.

De son côté, l'élément d'affichage 3 demande au module 9, via un conducteur 12, l'adresse mémoire à laquelle l'élément d'affichage doit lire en mémoire externe 4 la prochaine ligne de blocs a afficher.

A chaque demande d'adresse mémoire le module de contrôle scrute l'unité mémoire (notée MU) qui contient les informations relatives a chaque ligne de blocs présente dans la mémoire externe, et l'unité mémoire MU fournit a l'unité de calcul 5 (notée CU) un index qui y est décodé pour fournir l'adresse mémoire externe. Par exemple, à chaque demande d'adresse mémoire provenant de l'élément de décodage, le module de contrôle scrute l'unité MU, et si aucune zone ligne de blocs n'est disponible le décodage est stoppé dans l'attente de la libération d'un espace mémoire correspondant à une ligne de bloc, alors que si une zone ligne de bloc est disponible, l'unité MU fournit un index à l'unité CU qui génère l'adresse correspondante de la mémoire externe 4, et la fournit à l'élément de décodage 1, sur un conducteur 13.

Si une adresse pour l'affichage n'est pas disponible, autrement dit si le décodage ne s'est pas effectué correctement, l'élément gestionnaire de mémoire d'images 2 fournit à l'élément d'affichage 3 des adresses de zones mémoire ligne de blocs appartenant à la dernière image I ou P disponible en mémoire en vue de fournir une image assez proche de l'image à afficher normalement.

L'unité MU est constituée d'une mémoire et d'un générateur d'adresses. Etant donné que le nombre de lignes de blocs stockées en mémoire est borné, on utilise comme adresse de la mémoire de l'unité MU l'index de la ligne de blocs en mémoire externe. La donnée associée à cette adresse est constituée de 2 champs :
- donnée : qui correspond à l'index de la ligne de blocs dans l'image
- contrôle : qui contient toutes les informations de contrôle associées a la ligne de bloc en mémoire.

Le module de contrôle 9 travaille toujours par anticipation par rapport aux demandes des éléments de décodage 1 et d'affichage 3. Ainsi pendant le décodage (respectivement l'affichage) de la ligne de blocs numéro "n", il calcule l'adresse mémoire où écrire (respectivement lire) la ligne de blocs numéro "n+1".

Une gestion mémoire par images complètes conduirait à stocker trois images soit, avec un format de sous-échantillonnage d'un facteur deux en horizontal et en vertical pour la chrominance : 3x720x576x12 = 14,930 méga-bits.

Si on désire bâtir un système de décodage d'images en utilisant 16 méga-bits de mémoire dynamique, il ne reste que 1,847 méga-bits disponibles pour stocker les images comprimées.

En notant par "NBBP" le nombre de bits par pixel, l'invention n'utilise que (2 x DIMH x DIMV x NBBP) plus (N x DIMH × V × NBBP) bits au total pour les images décodées , soit en pratique par exemple : 2 × 720 × 576 × 12 plus 3 × 2 × 16 × 720 × 12 bits, c'est-à-dire 10,783 méga-bits pour la partie de mémoire des pixels. Par conséquent, elle permet d'utiliser dans un système muni d'une mémoire de 16 méga-bits : 5,990 méga-bits pour stocker les images comprimées, ainsi que toutes autres informations telles que : données comprimées audio, données système, données permettant de réaliser une fonction d'affichage d'informations graphiques.

## Revendications

1. Procédé pour décoder des images codées numériquement avec compression, le nombre de pixels à traiter par unité de temps étant fixe, une image étant divisée en blocs de pixels comportant chacun plusieurs pixels dans chacune des directions horizontale et verticale, une pluralité de blocs qui, côte à côte, occupent la largeur d'une ligne d'image étant appelée une ligne de blocs, la dite compression étant basée sur un traitement par blocs transmis séquentiellement, une image pouvant être définie d'au moins trois manières, à savoir des images dites "intra", codées en absolu sans référence par rapport à d'autres images, des images dites "prédites", codées en faisant référence à une précédente image intra ou prédite, et des images dites "bidirectionnelles" codées à partir d'au maximum deux autres images chacune intra ou prédite, procédé dans lequel chacune des images est affichée après décodage sous la forme d'une trame paire et d'une trame impaire et certaines images bidirectionnelles sont affichées avant une des images intra ou prédite qui servent à son décodage, les images bidirectionnelles sont décodées par étapes successives d'une ligne de blocs à la fois, un espace mémoire divisé en zones ayant chacune une capacité d'une ligne de blocs est prévu pour mémoriser des lignes de blocs d'une image bidirectionnelle nouvellement décodée et chaque ligne de blocs nouvellement décodée remplace au fur et à mesure en mémoire le contenu d'une des dites zones qui a déjà été affiché, **caractérisé en ce qu'**un décodage de chaque image bidirectionnelle est effectué au moins deux fois de suite, un décodage d'une image étant réalisé pour chaque trame à afficher, et **en ce que** l'affichage d'une des trames, paire ou impaire, tirée du contenu du premier décodage, commence avant la moitié de la durée du premier décodage, puis l'affichage de l'autre trame, respectivement impaire ou paire, tirée du contenu du second décodage, commence à son tour avant la moitié de la durée du second décodage.

2. Procédé selon la revendication 1, pour le décodage d'images de qualité standard à 25 images par seconde, **caractérisé en ce que**, à partir du début du décodage d'une trame de type intra, on compte deux départs d'affichage de trame, et le troisième correspond à l'affichage de la trame d'image intra en question.

3. Procédé selon la revendication 1, pour le décodage d'images de qualité standard à 30 images par seconde, **caractérisé en ce que**, à partir du début du décodage d'une trame de type intra, on compte trois départs d'affichage de trame, et le quatrième correspond à l'affichage de la trame d'image intra en question.

4. Procédé selon la revendication 1, pour le cas d'images à 24 images par seconde devant être affichées à 60 trames par seconde, **caractérisé en ce que**, pour un couple d'images bidirectionnelles, un décodage d'une des images du couple est effectué deux fois de suite et un décodage de l'autre image est effectué trois fois de suite, avec à chaque fois l'affichage d'une trame, commençant avant la moitié de la durée du décodage correspondant.

5. Procédé selon la revendication 1, **caractérisé en ce qu'**une gestion par zones ayant chacune une capacité d'une ligne de blocs est réalisée aussi pour les images intra ou prédites, gestion par laquelle toute zone ayant une capacité d'une ligne de blocs utilisée par une partie de trame est re-allouée pour stocker une partie de trame nouvellement décodée si son contenu a déjà été affiché et si elle n'est plus utilisée comme référence pour le décodage d'une image bidirectionnelle.

6. Procédé selon la revendication 1, **caractérisé en ce qu'**on place toute la capacité de mémoire destinée au stockage des images décodées dans un même boîtier mémoire d'une capacité de seize megabits, et on place aussi les images qui arrivent pour être décodées dans ce qui reste de mémoire dans le même boîtier.

7. Dispositif de réception munie de moyens pour décoder des images codées numériquement avec compression, le nombre de pixels à traiter par unité de temps étant fixe et une image étant divisée en blocs de pixels comportant chacun plusieurs pixels dans chacune des directions horizontale et verticale, une pluralité de blocs qui, côte à côte, occupent la largeur d'une ligne d'image étant appelée une ligne de blocs, la dite compression étant basée sur un traitement par blocs transmis séquentiellement, une image pouvant être définie d'au moins trois manières, à savoir des images dites "intra", codées en absolu sans référence par rapport à d'autres images, des images dites "prédites", codées en faisant référence à une précédente image intra ou prédite, et des images dites "bidirectionnelles" codées à partir d'au maximum deux autres images chacune intra ou prédite, installation munie de moyens pour afficher chacune des images, après décodage, sous la forme d'une trame paire et d'une trame impaire et pour afficher certaines images bidirectionnelles avant une des images intra ou prédite qui servent à son décodage, de moyens pour décoder les images bidirectionnelles par étapes successives d'une ligne de blocs à la fois, d'un espace mémoire divisé en zones ayant chacune une capacité d'une ligne de blocs, prévu pour mémoriser des lignes de blocs d'une image bidirectionnelle nouvellement décodée, et de moyens pour remplacer au fur et à mesure en mémoire le contenu d'une des dites zones qui a déjà été affiché par une ligne de blocs nouvellement décodée, **caractérisé en ce que** l'installation est en outre munie de moyens pour effectuer au moins deux fois de suite un décodage de chaque image bidirectionnelle et réaliser un décodage d'une image pour chaque trame à afficher, et de moyens pour faire commencer l'affichage d'une des trames, paire ou impaire, tirée du contenu du premier décodage, avant la moitié de la durée du premier décodage, et pour faire commencer à son tour l'affichage de l'autre trame, respectivement impaire ou paire, tirée du contenu du second décodage, avant la moitié de la durée du second décodage.

8. Dispositif de réception selon la revendication 7, pour le décodage d'images de qualité standard à 25 images par seconde, **caractérisé en ce qu'**elle est munie de moyens pour compter, à partir du début du décodage d'une trame de type intra, deux départs d'affichage de trame, et pour afficher la trame d'image intra en question au moment du troisième départ d'affichage de trame.

9. Dispositif de réception selon la revendication 7, pour le décodage d'images de qualité standard à 30 images par seconde, **caractérisé en ce qu'**elle est munie de moyens pour compter, à partir du début du décodage d'une trame de type intra, trois départs d'affichage de trame, et pour afficher la trame d'image intra en question au moment du quatrième départ d'affichage de trame.

10. Dispositif de réception selon la revendication 7, pour le cas d'images à 24 images par seconde devant être affichées à 60 trames par seconde, **caractérisé en ce qu'**elle est munie de moyens pour, lors d'un traitement d'un couple d'images bidirectionnelles, effectuer deux fois de suite un décodage d'une des images et effectuer trois fois de suite un décodage de l'autre image, et de moyens pour faire commencer, à chaque fois, l'affichage d'une trame avant la moitié de la durée du décodage correspondant.

11. Dispositif de réception selon la revendication 7, **caractérisé en ce qu'**elle est munie en outre de moyens pour réaliser aussi pour les images intra ou prédites une gestion par zones ayant chacune une capacité d'une ligne de blocs, et ces moyens re-allouent, pour stocker une partie de trame nouvellement décodée, toute zone ayant une capacité d'une ligne de blocs utilisée par une partie de trame, si son contenu a déjà été affiché et si elle n'est plus utilisée comme référence pour le décodage d'une image bidirectionnelle.

12. Dispositif de réception selon la revendication 7, **caractérisé en ce que** toute la capacité de mémoire destinée au stockage des images décodées y est contenue dans un même boîtier mémoire d'une capacité de seize megabits, et elle est munie de moyens pour placer aussi les images qui arrivent pour être décodées dans ce qui reste de mémoire dans le même boîtier.

## Claims

1. A method of decoding frames which have been encoded digitally while using compression, in which the number of pixels to be treated per unit of time is fixed, a frame is divided into blocks of pixels each comprising several pixels in each horizontal and vertical direction, a plurality of blocks which, side by side, occupy the length of a frame line referred to as a line of blocks, said compression being based on a treatment in blocks transmitted sequentially, while a frame can be defined in at least three ways, namely intraframes which are encoded in absolute values without reference to other frames, predicted-type frames which are encoded with reference to a preceding intraframe or predicted frame, and bidirectional frames which are encoded on the basis of a maximum number of two other frames which are each intraframes or predicted frames, in which method each frame is displayed after decoding in the form of an even field and an odd field, and certain bidirectional frames are displayed before one of the intraframes or predicted frames used for decoding, the bidirectional frames are decoded in successive stages of one line of blocks at a time, while a memory space divided into zones each having a capacity of one line of blocks is provided for storing lines of blocks of a bidirectional frame which has just been decoded, and the contents of one of said zones already displayed are progressively replaced in the memory by each line of blocks which has just been decoded, **characterized in that** each bidirectional frame is decoded at least twice in succession, while decoding of a frame is realised for each field to be displayed, and **in that** the display of one of the fields, even or odd, derived from the contents of the first decoding operation starts before half the period of the first decoding operation, and the display of the other field, odd or even, respectively, derived from the contents of the second decoding operation starts in its turn before half the period of the second decoding operation.

2. A method as claimed in claim 1, for decoding images of the standard quality of 25 frames per second, **characterized in that** two display starts of the field are counted from the start of decoding a field of the intra-type, and the third display start corresponds to the display of the field of the intraframe in question.

3. A method as claimed in claim 1, for decoding images of the standard quality of 30 frames per second, **characterized in that** three display starts of the field are counted from the start of decoding a field of the intra-type, and the fourth display start corresponds to the display of the field of the intraframe in question.

4. A method as claimed in claim 1, for the case where images of 24 frames per second must be displayed at 60 fields per second, **characterized in that**, for a couple of bidirectional frames, one of the frames of the couple is decoded twice in succession and the other frame is decoded three times in succession, each time with the display of a field, beginning before half the period of the corresponding decoding operation.

5. A method as claimed in claim 1, **characterized in that** a control by way of sections each having a capacity of one line of blocks is effected also for the intraframes or predicted frames, for which control each section having a capacity of one line of blocks used by a part of the field is reallocated for storing a part of the field which has just been decoded if the contents of this section have already been displayed and if it is no longer used as a reference for decoding a bidirectional frame.

6. A method as claimed in claim 1, **characterized in that** the whole memory capacity intended for storing decoded frames is located in a memory unit having a capacity of sixteen megabits, while the frames received for decoding are also located in the remaining part of the memory in the same unit.

7. A receiving device provided with means for decoding frames which have been encoded digitally while using compression, in which the number of pixels to be treated per unit of time is fixed, a frame is divided into blocks of pixels each comprising several pixels in each horizontal and vertical direction, a plurality of blocks which, side by side, occupy the length of a frame line referred to as a line of blocks, said compression being based on a treatment in blocks transmitted sequentially, while a frame can be defined in at least three ways, namely intraframes which are encoded in absolute values without reference to other frames, predicted-type frames which are encoded with reference to a preceding intraframe or predicted frame, and bidirectional frames which are encoded on the basis of a maximum number of two other frames which are each intraframes or predicted frames, which device is provided with means for displaying each frame after decoding in the form of an even field and an odd field, and for displaying certain bidirectional frames before one of the intraframes or predicted frames used for decoding, means for decoding the bidirectional frames in successive stages of one line of blocks at a time, while a memory space divided into zones each having a capacity of one line of blocks is provided for storing lines of blocks of a bidirectional frame which has just been decoded, and means for progressively replacing the contents of one of said zones already displayed in the memory by a line of blocks which has just been decoded, **characterized in that** the device is also provided with means for decoding each bidirectional frame at least twice in succession and realising decoding of a frame for each field to be displayed, and means for starting the display of one of the fields, even or odd, derived from the contents of the first decoding operation, before half the period of the first decoding operation and for starting in its turn the display of the other field, odd or even, respectively, derived from the contents of the second decoding operation.

8. A receiving device as claimed in claim 7, for decoding images of the standard quality of 25 frames per second, **characterized in that** said device is provided with means for counting two display starts of the field from the start of decoding a field of the intra-type, and for displaying the field of the intraframe in question at the instant of the third display start of the field.

9. A receiving device as claimed in claim 7, for decoding images of the standard quality of 30 frames per second, **characterized in that** said device is provided with means for counting three display starts of the field from the start of decoding a field of the intra-type, and for displaying the field of the intraframe in question at the instant of the fourth display start of the field.

10. A receiving device as claimed in claim 7, for the case where images of 24 frames per second must be displayed at 60 fields per second, **characterized in that** the device is provided with means for decoding, during treatment of a couple of bidirectional frames, one of the frames twice in succession and for decoding the other frame three times in succession, and means for each time starting the display of a field before half the period of the corresponding decoding operation.

11. A receiving device as claimed in claim 7, **characterized in that** said device is also provided with means for realising a control by way of sections each having a capacity of one line of blocks also for the intraframes or predicted frames, and said means reallocate each section having a capacity of one line of blocks used by a part of the field for storing a part of the field which has just been decoded if the contents of this section have already been displayed and if it is no longer used as a reference for decoding a bidirectional frame.

12. A receiving device as claimed in claim 7, **characterized in that** the whole memory capacity intended for storing decoded frames is contained in a memory unit having a capacity of sixteen megabits, and that said device is provided with means for also locating the frames received for decoding in the remaining part of the memory in the same unit.

## Patentansprüche

1. Verfahren zum Dekodieren digital kodierter, komprimierter Bilder, wobei die Anzahl der pro Zeiteinheit zu verarbeitenden Pixel fest ist, ein Bild in Pixelblöcke mit jeweils mehreren Pixeln in jeweils horizontaler und vertikaler Richtung unterteilt wird, eine Vielzahl an Blöcken, die nebeneinander jeweils die Breite einer Bildzeile einnehmen, als Blockzeile bezeichnet wird, die besagte Komprimierung auf einer Verarbeitung pro sequentiell übertragenem Block gründet, und die Bilder auf maximal drei Arten definiert werden können, d.h. als sogenannte "Intrabilder", absolut und ohne Bezug auf andere Bilder kodiert, sogenannte "Prädiktionsbilder", in bezug auf ein vorhergehendes Intra- oder Prädiktionsbild kodiert, sogenannte "Bidirektionsbilder", anhand von maximal zwei anderen jeweiligen Intra- oder Prädiktionsbildern kodiert, wobei im Verfahren jedes der Bilder nach dessen Dekodierung in der Form eines geraden Teilbilds und eines ungeraden Teilbilds angezeigt wird und gewisse Bidirektionsbilder vor den ihrer Dekodierung dienenden Intra- oder Prädiktionsbildern angezeigt werden, die Bidirektionsbilder in aufeinanderfolgenden Schritten blockzeilenweise dekodiert werden, ein in Zonen mit der jeweiligen Kapazität einer Blockzeile unterteilter Speicher vorgesehen ist, um die Blockzeilen eines neu dekodierten Bidirektionsbildes abzuspeichern und jede neu dekodierte Blockzeile schrittweise den Speicherinhalt einer der besagten Zonen ersetzt, die bereits angezeigt wurden, **dadurch gekennzeichnet, daß** die Dekodierung jedes Bidirektionsbildes mindestens zweimal hintereinander vorgenommen wird, wobei die Dekodierung eines Bildes für jedes anzuzeigende Teilbild vorgenommen wird, und dadurch, daß die Anzeige eines der geraden oder ungeraden, dem Inhalt der ersten Dekodierung entnommenen Teilbilder vor der Hälfte der ersten Dekodierungszeit beginnt, und die Anzeige des anderen jeweiligen geraden oder ungeraden, dem Inhalt der zweiten Dekodierung entnommenen Teilbildes seinerseits vor der Hälfte der zweiten Dekodierungszeit beginnt.

2. Verfahren nach Anspruch 1 für die Dekodierung von Bildern in Standardqualität mit 25 Bildern pro Sekunde, **dadurch gekennzeichnet, daß** man ab dem Beginn der Dekodierung eines Teilbildes vom Intratyp zwei beginnende Teilbildanzeigen zählt, und die dritte der Anzeige des betreffenden Intra-Teilbildes entspricht.

3. Verfahren nach Anspruch 1 für die Dekodierung von Bildern in Standardqualität mit 30 Bildern pro Sekunde, **dadurch gekennzeichnet, daß** man ab dem Beginn der Dekodierung eines Teilbildes vom Intratyp drei beginnende Teilbildanzeigen zählt, und die vierte der Anzeige des betreffenden Intra-Teilbildes entspricht.

4. Verfahren nach Anspruch 1 im Falle der Anzeige von 24 Bildern pro Sekunde, für die 60 Teilbilder pro Sekunde anzuzeigen sind, **dadurch gekennzeichnet, daß** für ein Bidirektions-Bildpaar die Dekodierung eines der Bilder zweimal hintereinander vorgenommen wird, und die Dekodierung des anderen Bildes dreimal hintereinander vorgenommen wird, mit der jeweiligen Anzeige eines Teilbilds, indem vor der Hälfte der dementsprechenden Dekodierungszeit begonnen wird.

5. Verfahren nach Anspruch 1, **dadurch gekennzeichnet, daß** eine Verwaltung nach Zonen mit der jeweiligen Kapazität einer Blockzeile auch für die Intra- oder Prädiktionsbilder vorgenommen wird, indem diese Verwaltung, um den Teil eines neu dekodierten Teilbilds abzuspeichern, jede Zone mit der Kapazität einer Blockzeile, die von einem Teil eines Teilbilds verwendet wird, neu zuteilt, wenn deren Inhalt bereits angezeigt wurde und sie nicht mehr als Bezug für die Dekodierung eines Bidirektionsbildes verwendet wird.

6. Verfahren nach Anspruch 1, **dadurch gekennzeichnet, daß** man die gesamte, zum Abspeichern der dekodierten Bilder vorgesehene Speicherkapazität in einem einzigen Speicherblock einer Kapazität von sechzehn Megabits unterbringt, und auch die zum Dekodieren eingehenden Bilder im restlichen Speicherplatz desselben Speicherblocks unterbringt.

7. Empfangsanlage mit Vorrichtung zum Dekodieren digital kodierter, komprimierter Bilder, wobei die Anzahl der pro Zeiteinheit zu verarbeitenden Pixel fest ist und ein Bild in Pixelblöcke mit jeweils mehreren Pixeln in jeweils horizontaler und vertikaler Richtung unterteilt wird, eine Vielzahl an Blöcken, die nebeneinander jeweils die Breite einer Bildzeile einnehmen, je als Blockzeile bezeichnet wird, die besagte Komprimierung auf einer Verarbeitung pro sequentiell übertragenem Block gründet und die Bilder auf maximal drei Arten definiert werden können, d.h. als sogenannte "Intrabilder", absolut und ohne Bezug auf andere Bilder kodiert, sogenannte "Prädiktionsbilder", in bezug auf ein vorhergehendes Intra- oder Prädiktionsbild kodiert und sogenannte "Bidirektionsbilder", anhand von maximal zwei anderen jeweiligen Intra- oder Prädiktionsbildern kodiert, Anlage mit einer Vorrichtung zum Anzeigen jedes der Bilder nach dessen Dekodierung in der Form eines geraden Teilbilds und eines ungeraden Teilbilds und zum Anzeigen gewisser Bidirektionsbilder vor den ihrer Dekodierung dienenden Intra- oder Prädiktionsbildern, einer Vorrichtung zum Dekodieren der Bidirektionsbilder in aufeinanderfolgenden Schritten und blockzeilenweise, einem in Zonen mit der jeweiligen Kapazität einer Blockzeile unterteilten Speicher, um die Blockzeilen eines neu dekodierten Bidirektionsbildes abzuspeichern, und einer Vorrichtung zum schrittweisen Ersetzen des Speicherinhalts einer der besagten Zonen, die bereits angezeigt wurden, durch eine neu dekodierte Blockzeile, **dadurch gekennzeichnet, daß** die Anlage zudem mit einer Vorrichtung versehen ist, um die Dekodierung jedes Bidirektionsbildes mindestens zweimal hintereinander durchzuführen und die Dekodierung eines Bildes für jedes anzuzeigende Teilbild vorzunehmen, und einer Vorrichtung, um die Anzeige eines der geraden oder ungeraden, dem Inhalt der ersten Dekodierung entnommenen Teilbildes vor der Hälfte der ersten Dekodierungszeit zu beginnen und die Anzeige des anderen jeweiligen geraden oder ungeraden, dem Inhalt der zweiten Dekodierung entnommenen Teilbildes seinerseits vor der Hälfte der zweiten Dekodierungszeit zu beginnen.

8. Empfangsanlage nach Anspruch 7 für die Dekodierung von Bildern in Standardqualität mit 25 Bildern pro Sekunde, **dadurch gekennzeichnet, daß** sie mit einer Vorrichtung versehen ist, um ab dem Beginn der Dekodierung eines Teilbildes vom Intratyp zwei beginnende Teilbildanzeigen zählt, und um das betreffende Intra-Teilbild zum Zeitpunkt des Beginns der dritten Teilbildanzeige anzuzeigen.

9. Empfangsanlage nach Anspruch 7 für die Dekodierung von Bildern in Standardqualität mit 30 Bildern pro Sekunde, **dadurch gekennzeichnet, daß** sie mit einer Vorrichtung versehen ist, um ab dem Beginn der Dekodierung eines Teilbildes vom Intratyp drei beginnende Teilbildanzeigen zählt, und um das betreffende Intra-Teilbild zum Zeitpunkt des Beginns der vierten Teilbildanzeige anzuzeigen.

10. Empfangsanlage nach Anspruch 7 im Falle der Anzeige von 24 Bildern pro Sekunde, für die 60 Teilbilder pro Sekunde anzuzeigen sind, **dadurch gekennzeichnet, daß** sie mit einer Vorrichtung versehen ist, um bei der Verarbeitung eines Bidirektions-Bildpaar die Dekodierung eines der Bilder zweimal hintereinander vorzunehmen, und die Dekodierung des anderen Bildes dreimal hintereinander vorzunehmen, und einer Vorrichtung, um bei der jeweiligen Anzeige eines Teilbilds vor der Hälfte der dementsprechenden Dekodierungszeit zu beginnen.

11. Empfangsanlage nach Anspruch 7, **dadurch gekennzeichnet, daß** sie zudem mit einer Vorrichtung versehen ist, um eine Verwaltung nach Zonen mit der jeweiligen Kapazität einer Blockzeile auch für die Intra- oder Prädiktionsbilder vorzunehmen, und diese Vorrichtung, um den Teil eines neu dekodierten Teilbilds abzuspeichern, jede Zone mit der Kapazität einer Blockzeile, die von einem Teil eines Teilbilds verwendet wird, neu zuteilt, wenn deren Inhalt bereits angezeigt wurde und sie nicht mehr als Bezug für die Dekodierung eines Bidirektionsbildes verwendet wird.

12. Empfangsanlage nach Anspruch 7, **dadurch gekennzeichnet, daß** die gesamte, zum Abspeichern der dekodierten Bilder vorgesehene Speicherkapazität in einem einzigen Speicherblock einer Kapazität von sechzehn Megabits untergebracht und sie mit einer Vorrichtung versehen ist, um auch die zum Dekodieren eingehenden Bilder im restlichen Speicherplatz desselben Speicherblocks unterzubringen.
